# EUROPÄISCHE PATENTSCHRIFT

(11) **EP 2 527 100 B1**
(45) Veröffentlichungstag und Bekanntmachung des Hinweises auf die Patenterteilung: **08.07.2015**
(21) Anmeldenummer: 12169334.5
(22) Anmeldetag: 24.05.2012
(51) Int. Cl.: B25J 15/06, B65G 47/91

(54) **Flächengreifer**
Surface gripper
Préhenseur de surface

(30) Priorität: 25.05.2011 DE 102011103148; 05.07.2011 DE 102011051585
(43) Veröffentlichungstag der Anmeldung: 28.11.2012
(73) Patentinhaber: Sicko, Carlo, 75059 Zaisenhausen (DE); Sicko, Jochen, 75059 Zaisenhausen (DE)
(72) Erfinder: Sicko, Carlo, 75059 Zaisenhausen (DE)
(74) Vertreter: Twelmeier Mommer & Partner

(56) Entgegenhaltungen:
- DE-A1- 10 245 716
- DE-A1-102006 046 624
- DE-A1-102006 050 970

## Beschreibung

Die Erfindung geht aus von einem Flächengreifer mit den im Oberbegriff des Anspruchs 1 angegebenen Merkmalen, wie er aus der DE 102 16 221 A1 oder der DE 10 2006 050 970 A1 bekannt ist.

Flächengreifer sind hervorragend geeignet, um platten- oder tafelförmige Werkstücke mit einer ebenen Oberfläche, beispielsweise Glasscheiben, zu greifen. Wenn die Saugplatte eines Flächengreifers an die Oberfläche eines solchen Werkstücks angesetzt wird, ergibt sich ein guter, flächiger Kontakt, so dass beim Anlegen von Unterdruck das Werkstück von den Ansaugöffnungen der Saugplatte angesaugt und durch Luftdruck zuverlässig an der Saugplatte gehalten wird.

Gestapelte Holzbretter haben oft eine mehr oder weniger stark gekrümmte Oberfläche, die den Einsatz von Flächengreifern erschwert. Beim Ansetzen der Saugplatte eines Flächengreifers an eine gekrümmte Fläche bleibt nämlich an gegenüberliegenden Enden der Saugplatte jeweils ein keilförmiger Spalt, der das Ansaugen erschwert.

Um eine Krümmung ausgleichen zu können, weisen die Saugplatten von Flächengreifern in der Regel einen Schaumstoffbelag auf. Die Kontur des Schaumstoffbelags kann sich beim Andrücken der Saugplatte gegen einen Stapel von Holzbrettern an eine vorhandene Krümmung anpassen und diese ausgleichen. Je dicker der Schaumstoffbelag ist, desto größere Krümmungen können ausgeglichen werden.

Wenn die Stärke des Schaumstoffbelags erhöht wird, muss aber darauf geachtet werden, dass von den Ansaugöffnungen durch den Schaumstoffbelag hindurchführende Kanäle nicht kollabieren und sich dadurch bei Anlegen von Unterdruck verschließen. Eine Möglichkeit, einen Selbstverschluss dieser Kanäle zu verhindern, besteht darin, statt schlitzförmigen Kanälen zylindrische Kanäle mit möglichst großem Durchmesser einzusetzen. Aus der DE 102 45 716 A1 ist es bekannt, zylindrische Kanäle in einem Schaumstoffbelag durch eingesetzte Wendelfedern zu stabilisieren. Eine andere Möglichkeit besteht darin, härteren Schaumstoff zu verwenden, der eine größere Formstabilität hat. Allerdings lassen sich die Ansaugöffnungen nur sehr begrenzt vergrößern und härterer Schaumstoff macht immer größere Anpresskräfte erforderlich, damit sich dieser an eine Krümmung anpasst.

Als Alternative ist es aus der DE 20 2005 004 799 U1 bekannt, an jeder Ansaugöffnung einen Faltenbalg anzubringen. Auf diese Weise lassen sich Unebenheiten der Oberfläche eines zu greifenden Werkstücks zwar gut ausgleichen, allerdings ist diese Lösung sehr teuer.

Aufgabe der vorliegenden Erfindung ist es, einen kostengünstigen Weg aufzuzeigen, wie gekrümmte Holzbretter besser mit einem Flächengreifer gegriffen werden können.

Diese Aufgabe wird durch einen Flächengreifer mit den im Anspruch 1 angegebenen Merkmalen gelöst. Vorteilhafte Weiterbildungen der Erfindung sind Gegenstand von Unteransprüchen.

Ein erfindungsgemäßer Flächengreifer kann seine Unterseite an eine Krümmung eines Holzstapels anpassen, beispielsweise indem der Flächengreifer mehrere Saugplatten aufweist, die jeweils gegen die Rückstellkraft von Federelementen relativ zu einem Träger, der die Saugplatten trägt, beweglich sind. Eine andere Möglichkeit besteht darin, dass eine biegsame Saugplatte verwendet wird, die mehrere Ansaugöffnungen aufweist, wobei wenigstens ein Federelement bei einer durch eine Biegung der Saugplatte bewirkten Relativbewegung eines Abschnittes der Saugplatte gegenüber dem Träger eine Rückstellkraft erzeugt.

Unabhängig davon, wie sich die Unterseite des Flächengreifers an eine gekrümmte Oberfläche anpasst, werden dadurch die Federelemente eines erfindungsgemäßen Greifers belastet und erzeugen eine Federkraft, welche der Krümmung von gegriffenen Holzbrettern entgegenwirkt. Wenn eine Lage von gekrümmten Holzbrettern von einer gekrümmten Stapeloberfläche abgenommen wird, verhindert die natürliche Steifigkeit von Holz, dass die Unterseite des Flächengreifers zusammen, mit gegriffenen Holzbrettern in ihre ebene Ausgangslage zurückkehren kann. Es bleibt deshalb eine Krümmung und eine damit verbundene Federkraft bestehen, die durch Ansaugkraft kompensiert werden muss, um zu verhindern, dass sich einzelne Bereiche einer Saugplatte oder einzelne Saugplatten von gegriffenen Brettern ablösen.

Bevorzugt wirkt deshalb zwischen der Saugplatte und dem Träger wenigstens eine Arretiervorrichtung, die in einem inaktiven Zustand eine Relativbewegung der Saugplatte gegenüber dem Träger zulässt und in einem aktiven Zustand die Saugplatte von der Rückstellkraft des Federelements oder der Federelemente entlastet.

Indem die vorhandene Krümmung bzw. Relativposition der Sauplatte arretiert wird, kann die Saugplatte von der Federkraft entlastet werden, so dass eine geringere Saugleistung ausreicht, um gekrümmte Bretter zu halten. Die Arretiereinrichtung kann die Sauplatte bevorzugt vollständig von der Rückstellkraft der Federelemente entlasten. Es genügt aber bereits, wenn die Arretiereinrichtung die Sauplatte teilweise von der Rückstellkraft des Federelements oder der Federelemente entlast, beispielsweise indem die Saugplatte nur von der Rückstellkraft eines Teils der Federelemente entlastet wird

Bevorzugt weist die Arretiervorrichtung einen an der Saugplatte befestigten ersten Teil und einen an dem Träger befestigten zweiten Teil auf, wobei der erste und der zweite Teil in dem inaktiven Zustand der Arretiervorrichtung relativ zueinander beweglich sind und die Arretiervorrichtung in dem aktiven Zustand einer Relativbewegung zwischen dem ersten Teil und dem zweiten Teil entgegenwirkt und dadurch die Saugplatte von der Rückstellkraft entlastet. Der erste Teil und/oder der zweite Teil können an sich auch integral mit der Sauplatte bzw. dem Träger ausgebildet werden, beispielsweise als aufgestellte Blechstreifen. Bevorzugt sind der erste und der zweite Teil aber als separate Bauteile ausgebildet, die an der Sauplatte bzw. dem Träger angebracht sind.

Die Arretiervorrichtung ermöglicht in ihrem inaktiven Zustand eine Relativbewegung zwischen dem an der Saugplatte befestigten ersten Teil und dem am Träger befestigten zweiten Teil. Wenn die Arretiervorrichtung in ihrem inaktiven Zustand ist, kann sich deshalb die Krümmung der Saugplatte bzw. ihrer Position relativ zu dem Träger ändern, nämlich indem der Flächengreifer gegen eine gekrümmte Oberfläche eines Stapels gedrückt wird. Nachdem die Saugplatte bzw. die Unterseite des Flächengreifers ihre Krümmung an die Oberfläche des Stapels angepasst hat, kann eine Lage von Brettern von dem Stapel abgenommen werden und die Arretiervorrichtung in ihren aktiven Zustand übergehen, in dem sie einer Änderung der Biegung der Saugplatte bzw. deren Position relativ zu dem Träger entgegenwirkt.

Ein erfindungsgemäßer Flächengreifer lässt sich so realisieren, dass die Arretiervorrichtung durch Steuersignale zwischen ihrem aktiven und ihrem inaktiven Zustand hin und her geschaltet werden kann. Besonders vorteilhaft ist es, wenn ein Übergang der Arretiervorrichtung in den aktiven Zustand durch den Beginn der Saugtätigkeit des Flächengreifers ausgelöst wird. Durch Beenden der Saugtätigkeit kann ein Übergang in den inaktiven Zustand ausgelöst werden. Dies lässt sich bei einer pneumatischen Arretiervorrichtung, beispielsweise einer Arretiervorrichtung, die mit einem Pneumatikzylinder eine Klemmung bewirkt, mit geringem Aufwand realisieren. Durch Anlegen von Unterdruck an den Flächengreifer kann dann vorteilhaft die Saugtätigkeit eingeleitet und die Arretiervorrichtung in ihren aktiven Zustand versetzt werden, ohne dass zusätzlich Steuersignale benötigt werden.

Bevorzugt sind der erste und der zweite Teil der Arretiervorrichtung linear zueinander beweglich, beispielsweise indem eine Stange verschiebbar in einer Öffnung der Arretiervorrichtung angeordnet ist. Möglich ist es aber auch, den ersten und den zweiten Teil der Arretiervorrichtung zueinander schwenkbar beweglich auszubilden, beispielsweise nach Art eines Kniegelenks.

Bevorzugt sind der erste und der zweite Teil der Arretiervorrichtung relativ zueinander linear in Richtung senkrecht zu Saugplatte beweglich. Zur Unterstützung dieser Beweglichkeit kann eine Linearführung vorgesehen sein.

Bevorzugt hat der Flächengreifer nur eine einzige Saugplatte. An sich können aber auch mehrere Sauplatten nebeneinander angeordnet sein, was aber fertigungstechnisch aufwändiger ist.

Die Federelemente sind bevorzugt als Wendelfedern ausgebildet, können beispielsweise aber auch Gasdruckfeder, Blattfedern, Bügelfedern oder sonstige Federelemente ausgebildet sein. Wendelfedern lassen sich mit vorteilhaft geringem Aufwand zwischen einer länglichen Saugplatte und einem Träger anordnen.

Der Träger bildet bevorzugt ein Gehäuse des Flächengreifers, wobei die Saugplatte einen Boden des Gehäuses bildet. So lässt sich erreichen, dass der Träger einen Kanal, der einen Unterdruckanschluss des Flächengreifers mit den Ansaugöffnungen verbindet, schützend umgibt. Das Gehäuse kann beispielsweise als ein Käfig ausgebildet sein, kann aber auch geschlossene Seitenwände aufweisen.

Die Saugplatte liegt auf dem Träger auf, indem der Träger an seiner Unterseite Stützabschnitte mit Auflageflächen aufweist, zwischen denen ein Abstand ist, den die auf den Auflageflächen liegende Saugplatte überbrückt. Der Träger greift also mit den Stützabschnitten um die Saugplatte herum. Wenn die Ansauplatte auf dem Träger aufliegt, kann sich die Saugplatte beim Andrücken an ein zu greifendes Werkstück von dem Träger abheben. Bevorzugt erstreckt sich dann ein oberer Teil des Trägers über der Saugplatte, wobei das Federelement oder die Federelemente zwischen der Saugplatte und dem oberen Teil des Trägers wirken, also bei einem Abheben der Saugplatte von Auflageflächen des Trägers auf Druck beansprucht werden.

Bevorzugt sind wenigstens 5, besonders bevorzugt mehr als 10, insbesondere mehr als 20 Federelemente auf der Saugplatte angeordnet. Die Federelemente sind bevorzugt in einer oder mehreren Reihen angeordnet. An sich genügt zwar auch eine kleinere Anzahl von Federelementen, allerdings wird durch 5 oder noch mehr Federelemente erreicht, dass sich eine biegsame Saugplatte noch besser auf einer größeren Länge auch an ein erheblich gekrümmtes Werkstücks flächig anlegt.

Bevorzugt lasten die Federelemente auf den Halteabschnitten der Saugplatte. Beispielsweise kann der Flächengreifer zwei Reihen Federelemente aufweisen, die auf den beiden Halteäbschnitten der Saugplatte sitzen.

Die Saugplatte kann beispielsweise aus Blech oder biegsamem Kunststoff sein. Zu Erhöhung der Biegsamkeit kann die Saugplatte Schlitze aufweisen, die quer zu ihrer Längsrichtung verlaufen. Bevorzugt gehen die Schlitze von Längsrändern der Saugplatte aus. Eine vorteilhafte Weiterbildung der Erfindung sieht vor, dass die Saugplatte zwei seitliche Abschnitte aufweist, die jeweils über eine Stufe mit einem zentralen Abschnitt verbunden sind, in dem die Ansaugöffnungen sind. Der zentrale Anschnitt liegt auf diese Weise unterhalb von den seitlichen Abschnitten, steht also nach unten vor. Falls die Saugplatte Stufen aufweist, erstrecken sich Schlitze bevorzugt bis in die Stufen hinein.

Bereits durch eine einzige Arretiervorrichtung, die dann bevorzugt in der Mitte des Flächengreifers angeordnet ist, lässt sich die Saugplatte merklich von der Federkraft entlasten und die Belastung des Flächengreifers deutlich reduzieren. Bevorzugt hat ein erfindungsgemäßer Flächengreifer mehrere Arretiervorrichtungen, beispielsweise mindestens drei Arretiervorrichtungen.

Bevorzugt ist jeder Ansaugöffnung ein Ventil zugeordnet, das sich selbsttätig schließt, sobald ein durch das Ventil strömender Luftstrom einen Schwellenwert überschreitet. Beim pneumatischen Greifen von Werkstücken kommt es immer wieder vor, dass einzelne Ansaugöffnungen des Flächengreifers nicht an einem Werkstück anliegen, beispielsweise weil das Werkstück kleiner als die Saugplatte ist. Beim Anlegen von Unterdruck würde in einem solchen Fall durch die betreffende Ansaugöffnung fortlaufend Luft eingesaugt werden, was einen unnötigen Energieverbrauch mit sich bringen und die Unterdruckquelle des Flächengreifers unnötig belasten würde. Mit einem Ventil, das sich selbsttätig schließt, sobald ein durch das Ventil strömender Luftstrom einen Schwellenwert überschreitet, kann dies vermieden werden. Ein geeignetes Ventil ist beispielsweise aus der DE 198 14 262 C2 bekannt.

Eine vorteilhafte Weiterbildung der Erfindung sieht vor, dass der Flächengreifer einen Unterdruckanschluss zum Anschließen an eine Unterdruckquelle aufweist, der über wenigstens einen Schlauch mit den Ansaugöffnungen verbunden ist. Bevorzugt trägt die Saugplatte den Schlauch. Ein Schlauch kann Biegungen und Krümmungen der Saugplatte gut folgen. Geeignet sind beispielsweise Schläuche, die mit Draht, beispielsweise in Form von Ringen oder einer Wendel, verstärkt sind oder Wellrohre. Der Schlauch oder die Schläuche sind bevorzugt über Öffnungen in der Mantelfläche an die Ansaugöffnungen angeschlossen. Beispielsweise kann ein Ventil mit einem Ende in einer Ansaugöffnung und mit seinem anderen Ende in einer Öffnung in der Mantelfläche des Schlauchs stecken.

Die Ansaugseite der Saugplatte wird als Unterseite bezeichnet, die gegenüber Seite als Oberseite. Richtungsangaben wie "oben" ",unten" und "über" beziehen somit jeweils auf die Saugplatte unabhängig von der Orientierung des Flächengreifers im Schwerkraftfeld der Erde.

Weitere Einzelheiten und Vorteile der Erfindung werden an einem Ausführungsbeispiel der Erfindung unter Bezugnahme auf die beigefügten Zeichnungen erläutert. Es zeigen:
- Figur 1: ein Greifersystem mit vier pneumatischen Flächengreifern;
- Figur 2: einen einzelnen Flächengreifer;
- Figur 3: den in Figur 2 dargestellten Flächengreifer ohne Träger und Arretiervorrichtungen;
- Figur 4: eine Ansicht des in Figur 2 dargestellten Flächengreifers mit transparentem Träger;
- Figur 5: eine Schnittansicht zu Figur 4 entlang der Schnittlinie AA;
- Figur 6: eine Schnittansicht zu Figur 4 entlang der Schnittlinie BB;
- Figur 7: eine weitere Ansicht des Flächengreifers;
- Figur 8: eine schematische Darstellung zu Figur 7 mit gekrümmter Saugplatte; und
- Figur 9: eine Arretiervorrichtung des in Figur 7 und 8 dargestellten Flächengreifers.

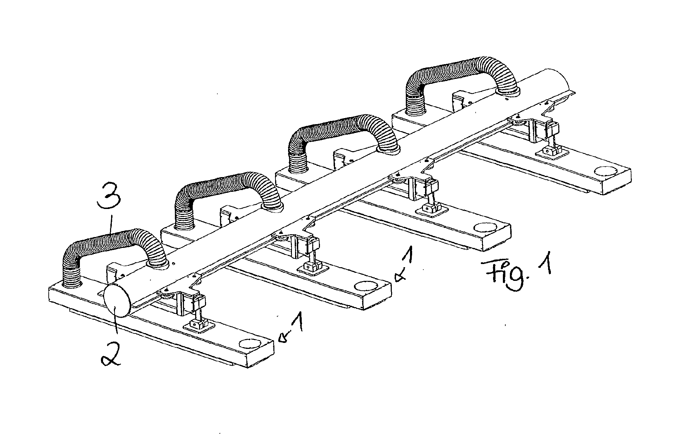

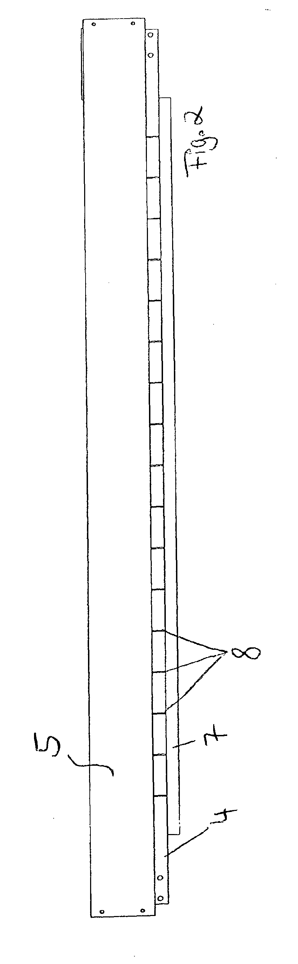

Figur 1 zeigt ein Greifersystem mit mehreren pneumatischen Flächengreifern 1, die jeweils an dem gemeinsamen Rohr 2 aufgehängt und an dieses über einen Schlauch 3 angeschlossen sind. In den Figuren 2 bis 8 sind verschiedene Ansichten eins solchen Flächengreifers 1 dargestellt.

Der Flächengreifer 1 hat an seiner Unterseite eine längliche Saugplatte 4, die mehrere Ansaugöffnungen aufweist und von einem Träger 5 getragen wird, der ein Gehäuse des Flächengreifers 1 bildet. Die Saugplatte 4 ist der Boden dieses Gehäuses.

Zwischen der Saugplatte 4 und dem Träger 5 wirken Federelemente 6, die jeweils bei einer Biegung der Saugplatte 4 eine Rückstellkraft erzeugen. Eine Biegung der Saugplatte 4 bewirkt eine Relativbewegung von Abschnitten der Saugplatte gegenüber dem Träger 5 und führt deshalb auch zu einer Auslenkung der Federelemente 6.

Bei dem dargestellten Ausführungsbeispiel sind zwei Reihen von Federelementen 6 vorhanden. Die Federelemente 6 können aber beispielsweise auch in einer einzigen Reihe in der Mitte der Saugplatte 4 angeordnet werden. Die Federelemente 6 sind bevorzugt als Wendelfedern ausgebildet.

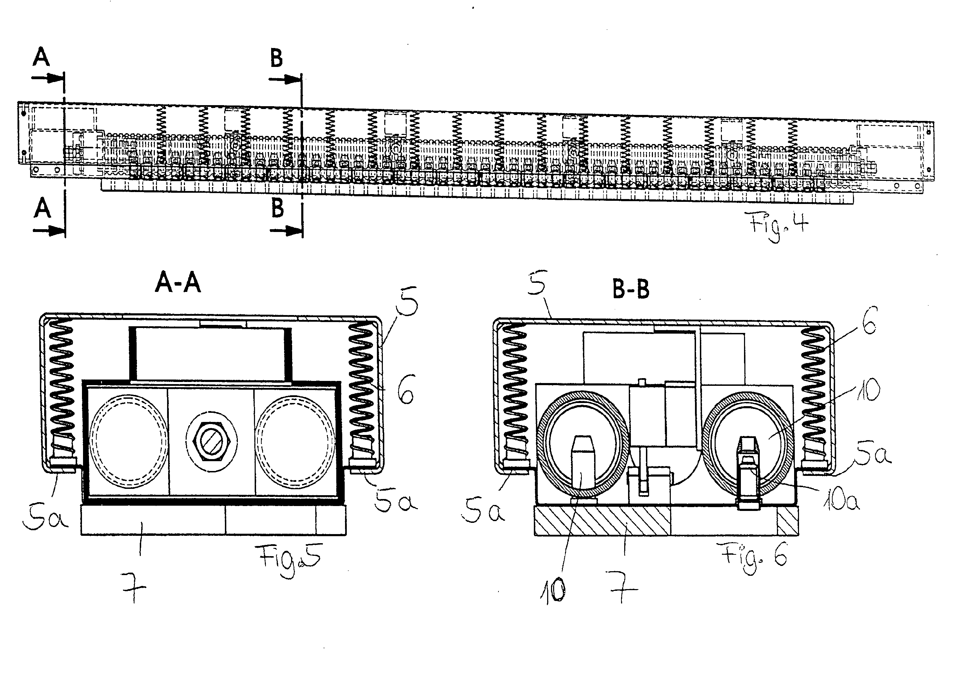

Wie insbesondere die Figuren 5 und 6 zeigen, hat der Träger 5 an seiner Unterseite zwei Auflageflächen 5a, auf denen die Saugplatte 4 mit jeweils einem seitlichen Abschnitt aufliegt. Die seitlichen Abschnitte können deshalb als Halteabschnitte bezeichnet werden. Zwischen den Halteabschnitten und einem zentralen Abschnitt, in dem die Ansaugöffnungen angeordnet sind, weist die Saugplatte 4 jeweils eine Stufe auf. Der zentrale Abschnitt der Saugplatte 4 hat einen Belag aus Schaumstoff 7. In dem Schaumstoffbelag 7 sind Aussparungen, beispielsweise Schlitze. Jeweils eine Ansaugöffnung 4 der Saugplatte 4 liegt in einer solchen Aussparung.

Wenn die Saugplatte 4 gegen ein zu greifendes Werkstück gedrückt wird, hebt sich die Saugplatte 4 an der betreffender Stelle von dem Träger 5 ab, wobei die Federelemente 6 in dem betreffenden Abschnitt belastet werden.

Die Saugplatte 4 ist biegsam ausgebildet, bevorzugt aus Blech, und kann sich deshalb an die Krümmung eines zu greifenden Werkstücks anpassen. Zur Erhöhung der Biegsamkeit weist die Saugplatte Schlitze 8 auf, die sich ausgehend von den Längsrändern der Saugplatte 4 bevorzugt senkrecht zur Längsrichtung der Saugplatte 4 erstrecken. Bevorzugt erstrecken sich die Schlitze bis zu dem zentralen Abschnitt, in dem die Ansaugöffnungen 4 angeordnet sind, und durch die Stufe, die zwischen Halteabschnitt und zentralen Abschnitt ist, hindurch. Bei dem dargestellten Ausführungsbeispiel ist zwischen zwei Schlitzen 8 jeweils ein Federelement 6 angeordnet. Es können aber auch einige dieser Federelemente 6 weg gelassen werden.

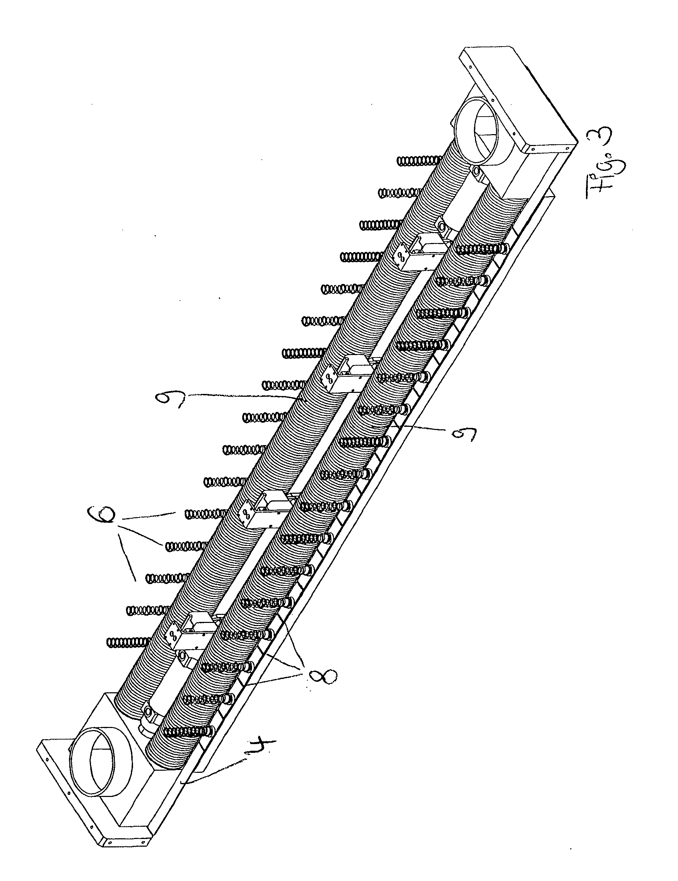

Die Saugplatte 4 trägt wenigstens einen Schlauch 9, über den die Ansaugöffnungen 4 an einen Unterdruckanschluss des Flächengreifers 1 angeschlossen sind. Bei dem dargestellten Ausführungsbeispiel sind zwei Schläuche 9 nebeneinander angeordnet, wobei jeder Schlauch 9 eine Reihe von Ansaugöffnungen mit dem Unterdruckanschluss verbindet. Die Anzahl der Schläuche kann größer oder kleiner als bei dem in Figur 3 dargestellten Ausführungsbeispiel sein. Bevorzugt sind aber genau zwei Schläuche vorhanden. Die Schläuche sind Unterdruckschläuche, d.h. sie können Unterdruck standhalten ohne zu kollabieren. Beispielsweise können die Schläuche mit einer Wendel, bevorzugt einer Drahtwendel, verstärkt sein.

Die Ansaugöffnungen der Saugplatte 4 stehen über Öffnungen in der Mantelfläche der Schläuche 9 mit dem Innenraum der Schläuche 9 in Verbindung. Bevorzugt ist in die Öffnungen der Schläuche 9 ein Ventil 10 gesteckt, das zu einer Ansaugöffnung führt. Wie Figur 6 zeigt das Ventil 10 enthält einen zylindrischen Schließkörper 10a. Überschreitet ein durch das Ventil 10 strömender Luftstrom einen vorgegebenen Schwellenwert, wird der Schließkörper 10a angehoben und verschließt so das Ventil 10.

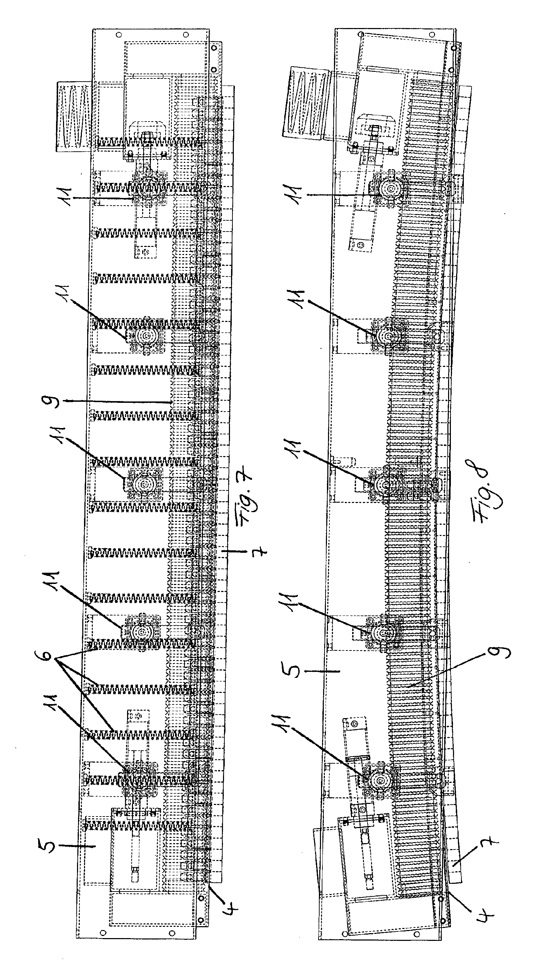

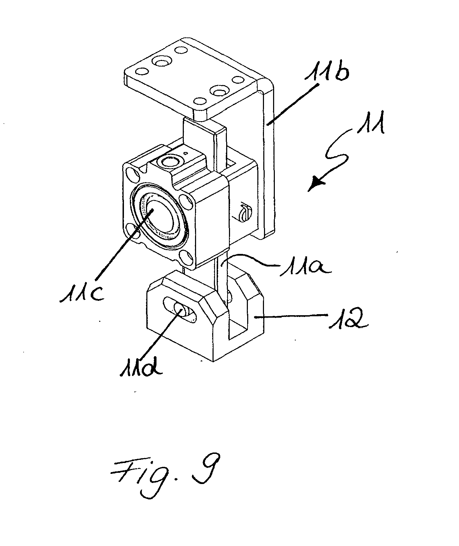

In Figur 7 ist eine weitere Ansicht des Flächengreifers dargstellt, in der auch Arretiervorrichtungen 11 zu sehen sind, die zwischen der Saugplatte 4 und dem Träger 5 wirken. Ein Ausführungsbeispiel einer solchen Arretiervorrichtung ist in Figur 9 dargestellt. Die Arretiervorrichtung 11 lässt in ihrem inaktiven Zustand eine durch eine Biegung der Saugplatte 4 bewirkte Relativbewegung der Saugplatte 4 gegenüber dem Träger 5 zu und entlastet in einem aktiven Zustand die Saugplatte 4 zumindest teilweise von der Rückstellkraft der Federelemente 6. Die Arretiervorrichtung hat einen an der Saugplatte 4 befestigten ersten Teil 11a, einen an dem Träger 5 befestigten zweiten Teil 11b und enthält einen Pneumatikzylinder 11c, der durch Klemmung eine Relativbewegung zwischen dem ersten Teil 11 a und dem zweiten Teil 11 b verhindern kann. In ihrem inaktiven Zustand lässt die Arretiervorrichtung 11 eine Relativbewegung zwischen dem ersten Teil 11a und dem zweiten Teil 11b zu. In ihrem aktiven Zustand wirkt die Arretiervorrichtung 11 einer Relativbewegung zwischen dem ersten Teil 11a und dem zweiten Teil 11 b entgegen.

Solange sich die Arretiervorrichtung 11 in ihrem inaktiven Zustand befindet, kann sich die Saugplatte 4 biegen, beispielsweise wenn der Flächengreifer gegen eine gekrümmte Oberfläche eines Holzstapels gepresst wird. Die Saugplatte 4 passt sich dann durch Biegen an die Krümmung des Holzstapels an. In Figur 8 ist schematisch der Flächengreifer mit einer gekrümmten Saugplatte 4 dargestellt. Ansonsten unterscheidet sich Figur 8 nur dadurch von Figur 7, dass zur Vereinfachung die Federelemente 6 nicht dargestellt sind. Wenn sich die Saugplatte 4 biegt, kommt es zu einer Relativbewegung zwischen dem an der Saugplatte 4 befestigten ersten Teil 11a der Arretiervorrichtung 11 und dem an dem Träger 5 befestigten zweiten Teil 11 b der Arretiervorrichtung 11.

Wenn die Arretiervorrichtung 11 in ihren aktiven Zustand übergeht, werden das erste und das zweite Teil 11 a, 11 b an einander festgeklemmt. Diese Klemmung wird bei dem dargestellten Ausführungsbeispiel mit dem Pneumatikzylinder 11c der Arretiervorrichtung 11 bewirkt. Bevorzugt wird durch das Anlegen von Unterdruck an den Flächengreifer die Arretiervorrichtung 11 in ihrem aktiven Zustand versetzt. Vorteilhaft sind auf diese Weise keine zusätzlichen Steuersignale nötig. Wenn der Flächengreifer ansaugt, befindet sich die Arretiervorrichtung 11 in ihrem aktiven Zustand. Wenn der Flächengreifer seine Saugtätigkeit beendet hat, geht die Arretiervorrichtung 11 selbsttätig in ihrem inaktiven Zustand über, so dass sich die Saugplatte 4 wieder biegen kann.

Bei dem dargestellten Ausführungsbeispiel weist die Arretiervorrichtung 11 eine Linearführung für die Relativbewegung zwischen dem ersten Teil 11a und der zweiten Teil 11 b auf. Eines der beiden Teile 11 a, 11 b, beispielsweise das erste Teil 11 a, bewegt sich entlang der Linearführung, nämlich durch eine Aufnahme hindurch.

Für eine möglichst leichte Biegsamkeit der Saugplatte 4 ist eine relativ große Beweglichkeit der Saugplatte 4 vorteilhaft. Bei dem dargestellten Ausführungsbeispiel ist deshalb die Arretiervorrichtung 11 relativ zur Saugplatte 4 in Längsrichtung der Saugplatte 4 beweglich. Dies wird dadurch erreicht, dass das an der Saugplatte 4 befestigte erste Teil 11a der Arretiervorrichtung 11 beweglich an der Saugplatte 4 befestigt ist, indem es mit einem Zapfen 11 d in einem Schlitz eines Befestigungsteils 12 gehalten ist. Der Schlitz des Befestigungsteils 12 erstreckt sich in Längsrichtung der Saugplatte 4. Das Befestigungsteil sitzt auf der Saugplatte 4 und ist mit dieser verbunden, beispielsweise verschweißt oder verschraubt.

Das an der Saugplatte 4 befestigte erste Teil 11a ist deshalb bei dem dargestellten Ausführungsbeispiel sowohl in Längsrichtung der Saugplatte 4 beweglich, nämlich in dem der Zapfen 11 d in den Schlitz gleitet, als auch senkrecht zur Saugplatte 4 beweglich, nämlich indem das erste Teil 11a in der Öffnung der Arretiervorrichtung 11 verschoben wird.

### Bezugszahlen

- 1: Flächengreifer
- 2: Rohr
- 3: Schlauch
- 4: Saugplatte
- 5: Träger
- 5a: Auflagefläche
- 6: Federelement
- 7: Schaumstoffbelag
- 8: Schlitze
- 9: Schlauch
- 10: Ventil
- 10a: Schließkörper
- 11: Arretiervorrichtung
- 11a: erster Teil der Arretiervorrichtung
- 11b: zweiter Teil der Arretiervorrichtung
- 11c: Pneumatikzylinder
- 11a: Zapfen
- 12: Befestigungsteil

## Patentansprüche

1. Flächengreifer zum Greifen von Holzbrettern von einem Stapel, mit einer Saugplatte (4), die mehrere Ansaugöffnungen aufweist, und
einem Träger (5), der die Saugplatte (4) trägt,
**dadurch gekennzeichnet, dass**
zwischen der Saugplatte (4) und dem Träger (5) mehrere Federelemente (6) wirken, die jeweils bei einer durch eine Biegung der Saugplatte (4) bewirkten Relativbewegung eines Abschnitts der Saugplatte (4) gegenüber dem Träger (5) eine Rückstellkraft erzeugen, und dass
die Saugplatte (4) auf Stützabschnitten des Trägers (5) aufliegt, mit denen der Träger (5) um Längsränder der Saugplatte (4) herum greift.

2. Flächengreifer nach Anspruch 1, **dadurch gekennzeichnet, dass** die Federelemente (6) Wendelfedern sind.

3. Flächengreifer nach einem der vorstehenden Ansprüche, **dadurch gekennzeichnet, dass** die Saugplatte (4) zur Erhöhung ihrer Biegsamkeit Schlitze (8) aufweist, die quer zu ihrer Längsrichtung verlaufen.

4. Flächengreifer nach Anspruch 3, **dadurch gekennzeichnet, dass** die Schlitze (8) von Längsrändern der Saugplatte (4) ausgehen.

5. Flächengreifer nach einem der vorstehenden Ansprüche, **dadurch gekennzeichnet, dass** die Saugplatte (4) zwei seitliche Abschnitte aufweist, die über eine Stufe mit dem zentralen Abschnitt verbunden sind, in dem die Ansaugöffnungen angeordnet sind.

6. Flächengreifer nach einem der vorstehenden Ansprüche, **dadurch gekennzeichnet, dass** die Ansaugöffnungen über wenigstens einen Schlauch (9) mit einem Unterdruckanschluss in Verbindung stehen, wobei die Saugplatte (4) den Schlauch (9) trägt und der Schlauch (9) in einer Mantelfläche Öffnungen aufweist, die zu den Ansaugöffnungen führen.

7. Flächengreifer nach Anspruch 6, **dadurch gekennzeichnet, dass** in den Öffnungen in der Mantelfläche des Schlauchs (9) Ventile (10) stecken, die zu den Ansaugöffnungen führen.

8. Flächengreifer nach einem der vorstehenden Ansprüche, **dadurch gekennzeichnet, dass** der Träger (5) ein Gehäuse bildet, dessen Boden die Saugplatte (4) ist.

9. Flächengreifer nach einem der vorstehenden Ansprüche, **dadurch gekennzeichnet, dass** zwischen der Saugplatte (4) und dem Träger (5) wenigstens eine Arretiervorrichtung (11) wirkt, die in einem inaktiven Zustand eine Relativbewegung der Saugplatte (4) gegenüber dem Träger (5) zulässt und in einem aktiven Zustand die Saugplatte (4) von der Rückstellkraft entlastet.

10. Flächengreifer nach Anspruch 9, **dadurch gekennzeichnet, dass** die Arretiervorrichtung (11) einen an der Saugplatte (4) befestigten ersten Teil (11a) und einen an dem Träger (5) befestigten zweiten Teil (11b) aufweist, wobei der erste und der zweite Teil in dem inaktiven Zustand der Arretiervorrichtung (11) relativ zueinander beweglich sind und die Arretiervorrichtung (11) in dem aktiven Zustand einer Relativbewegung zwischen dem ersten Teil (11a) und dem zweiten Teil (11b) entgegenwirkt und dadurch die Saugplatte (4) von der Rückstellkraft entlastet.

11. Flächengreifer nach Anspruch 9 oder 10, **dadurch gekennzeichnet, dass** die Arretiervorrichtung (11) einen Pneumatikzylinder (11c) aufweist.

12. Flächengreifer nach einem der Ansprüche 9 bis 11, **dadurch gekennzeichnet, dass** das die Arretiervorrichtung (11) relativ zu der Saugplatte (4) in Längsrichtung der Sauplatte (4) beweglich ist.

13. Flächengreifer nach einem der vorstehenden Ansprüche, **dadurch gekennzeichnet, dass** die Saugplatte (4) einen Belag aus Schaumstoff (7) hat.

## Claims

1. A surface gripper for gripping wooden boards from a stack, comprising a suction plate (4), which has a plurality of suction openings, and comprising a carrier (5), which carries the suction plate (4),
**characterised in that**
a plurality of spring elements (6) act between the suction plate (4) and the carrier (5) and each generate a restoring force in the event of a movement of a portion of the suction plate (4) relative to the carrier (5) caused by a deflection of the suction plate (4), and **in that** the suction plate (4) rests on supporting portions of the carrier (5), by means of which the carrier (5) grasps around longitudinal edges of the suction plate (4).

2. The surface gripper according to Claim 1, **characterised in that** the spring elements (6) are coiled springs.

3. The surface gripper according to one of the preceding claims, **characterised in that** the suction plate (4) has, in order to increase the flexibility thereof, slits (8), which extend transversely to the longitudinal direction of the suction plate.

4. The surface gripper according to Claim 3, **characterised in that** the slits (8) start from longitudinal edges of the suction plate (4).

5. The surface gripper according to one of the preceding claims, **characterised in that** the suction plate (4) has two lateral portions, which are connected via a step to the central portion, in which the suction openings are arranged.

6. The surface gripper according to one of the preceding claims, **characterised in that** the suction openings are connected via at least one tube (9) to a vacuum connector, wherein the suction plate (4) carries the tube (9), and the tube (9) has openings in a circumferential surface, which openings lead to the suction openings.

7. The surface gripper according to Claim 6, **characterised in that** valves (10) plug into the openings in the circumferential surface of the tube (9) and lead to the suction openings.

8. The surface gripper according to one of the preceding claims, **characterised in that** the carrier (5) forms a housing, of which the base is the suction plate (4).

9. The surface gripper according to one of the preceding claims, **characterised in that** at least one locking device (11) acts between the suction plate (4) and the carrier (5) and allows a movement of the suction plate (4) relative to the carrier (5) in an inactive state and relieves the suction plate (4) of the restoring force in an active state.

10. The surface gripper according to Claim 9, **characterised in that** the locking device (11) has a first part (11a) secured to the suction plate (4) and a second part (11b) secured to the carrier (5), wherein the first and the second part are movable relative to one another in the inactive state of the locking device (11), and the locking device (11) counteracts a relative movement between the first part (11a) and the second part (11b) in the active state and thus relieves the suction plate (4) of the restoring force.

11. The surface gripper according to Claim 9 or 10, **characterised in that** the locking device (11) has a pneumatic cylinder (11c).

12. The surface gripper according to one of Claims 9 to 11, **characterised in that** the locking device (11) is movable relative to the suction plate (4) in the longitudinal direction of the suction plate (4).

13. The surface gripper according to one of the preceding claims, **characterised in that** the suction plate (4) has a coating made of foam (7).

## Revendications

1. Organe de préhension de surfaces pour la préhension de planches en bois d'un empilement, avec une plaque d'aspiration (4) qui présente plusieurs orifices d'aspiration, et un support (5) portant la plaque d'aspiration (4)
**caractérisé en ce que**
que plusieurs éléments élastiques (6) sont en action entre la plaque d'aspiration (4) et le support (5), chacun produisant une force de rappel lors d'un mouvement relatif d'une partie de la plaque d'aspiration (4) par rapport au support (5) provoqué par une flexion de la plaque d'aspiration (4), et que
la plaque d'aspiration (4) repose sur des parties d'appui du support (5) avec lesquelles le support (5) s'agrippe tout autour des rebords longitudinaux de la plaque d'aspiration (4).

2. Organe de préhension de surfaces selon la revendication 1, **caractérisé en ce que** les éléments élastiques (6) sont des ressorts hélicoïdaux.

3. Organe de préhension de surfaces selon l'une des revendications précédentes, **caractérisé en ce que** la plaque d'aspiration (4) présente des fentes (8) pour l'augmentation de sa flexibilité, qui s'étendent perpendiculairement par rapport à sa direction longitudinale.

4. Organe de préhension de surfaces selon la revendication 3, **caractérisé en ce que** les fentes (8) s'étendent à partir des rebords longitudinaux de la plaque d'aspiration (4).

5. Organe de préhension de surfaces selon l'une des revendications précédentes, **caractérisé en ce que** la plaque d'aspiration (4) présente deux parties latérales qui sont reliées par une différence de niveau avec la partie centrale dans laquelle sont agencés les orifices d'aspiration.

6. Organe de préhension de surfaces selon l'une des revendications précédentes, **caractérisé en ce que** les orifices d'aspiration sont en communication avec une prise de vide par l'intermédiaire d'au moins un tuyau (9), la plaque d'aspiration (4) portant le tuyau (9) et le tuyau (9) présentant des orifices sur une surface d'enveloppe qui mènent aux orifices d'aspiration.

7. Organe de préhension de surfaces selon la revendication 6, **caractérisé en ce que** des valves (10), qui mènent aux orifices d'aspiration, sont plantées dans les orifices sur la surface d'enveloppe du tuyau (9).

8. Organe de préhension de surfaces selon l'une des revendications précédentes, **caractérisé en ce que** le support (5) forme un boîtier dont le fond constitue la plaque d'aspiration (4).

9. Organe de préhension de surfaces selon l'une des revendications précédentes, **caractérisé en ce qu'**au moins un dispositif de blocage (11) est en action entre la plaque d'aspiration (4) et le support (5), permettant un mouvement relatif de la plaque d'aspiration (4) par rapport au support (5) dans un état inactif, et délestant la plaque d'aspiration (4) de la force de rappel dans un état actif.

10. Organe de préhension de surfaces selon la revendication 9, **caractérisé en ce que** le dispositif de blocage (11) présente une première partie (11a) fixée sur la plaque d'aspiration (4) et une deuxième partie (11b) fixée sur le support (5), où la première et la deuxième partie sont relativement mobiles l'une par rapport à l'autre dans un état inactif du dispositif de blocage (11) et où le dispositif de blocage (11) agit contre un mouvement relatif entre la première partie (11a) et la deuxième partie (11b) dans l'état actif, et de ce fait déleste la plaque d'aspiration (4) de la force de rappel.

11. Organe de préhension de surfaces selon les revendications 9 ou 10, **caractérisé en ce que** le dispositif de blocage (11) présente un cylindre pneumatique (11c).

12. Organe de préhension de surfaces selon l'une des revendications 9 à 11, **caractérisé en ce que** le dispositif de blocage (11) est mobile dans la direction longitudinale de la plaque d'aspiration (4) relativement par rapport à la plaque d'aspiration (4).

13. Organe selon l'une des revendications précédentes, **caractérisé en ce que** la plaque d'aspiration (4) possède une garniture en mousse (7)..
